# EUROPÄISCHE PATENTSCHRIFT

(11) **EP 0 530 655 B1**
(45) Veröffentlichungstag und Bekanntmachung des Hinweises auf die Patenterteilung: **03.01.1996**
(21) Anmeldenummer: 92114500.9
(22) Anmeldetag: 26.08.1992
(51) Int. Cl.: F02D 41/14

(54) **Verfahren und Vorrichtung zur Regelung eines Otto-Motors und Prüfung eines ihm nachgeschalteten Katalysators**
Method and apparatus for controlling an internal combustion engine and testing its catalytic converter
Méthode et dispositif de régulation d'un moteur à combustion interne avec contrôle de son catalysateur

(30) Priorität: 31.08.1991 DE 4128997
(43) Veröffentlichungstag der Anmeldung: 10.03.1993
(73) Patentinhaber: LAMTEC Mess- und Regeltechnik für Feuerungen GmbH & Co KG, 69190 Walldorf (DE)
(72) Erfinder: Baier, Gunar, Dr., W-6800 Mannheim 81 (DE)
(74) Vertreter: Rupprecht, Klaus, Dipl.-Ing.

(56) Entgegenhaltungen:
- EP-A- 0 492 165
- US-A- 3 969 932
- US-A- 4 007 589
- PATENT ABSTRACTS OF JAPAN vol. 014, no. 357 (M-1005) 2. August 1990 & JP-A-21 25 941 (NIPPON DENSO) 14. Mai 1990
- PATENT ABSTRACTS OF JAPAN vol. 011, no. 385 (M-651) 16. Dezember 1987 & JP-A-62 153 546 (NIPPON DENSO) 8. Juli 1987
- PATENT ABSTRACTS OF JAPAN vol. 013, no. 032 (P-817) 25. Januar 1989 & JP-A-63 231 252 (MITSUBISHI) 27. September 1988

## Beschreibung

Die Erfindung bezieht sich auf ein Verfahren und eine Vorrichtung zur Regelung der Abgaszusammensetzung eines Otto-Motors und zur Funktionsprüfung eines Katalysators gemäß dem Oberbegriff der Patentansprüche 1 und 2.

Ein solches Verfahren und eine solche Vorrichtung kommen dort zum Einsatz, wo Schadstoffe von Abgasen aus Otto-Motoren mittels Katalysatoren entfernt werden. Um die Abgase solcher Motoren vollständig zu reinigen, wird bei den bekannten Vorrichtungen das Kraftstoff/Luft Verhältnis von Otto-Motoren mit einer Lambdasonde geregelt, und das Abgas anschließend über einen Dreiwegekatalysator geleitet. Dadurch wird erreicht, daß noch trennbare Bestandteile wie Kohlenmonoxid und Wasserstoff oxidiert und Stickoxide reduziert werden. Die Funktionsfähigkeit eines solchen Katalysators nimmt mit wachsender Betriebsdauer ab. Es ist deshalb notwendig, die Funktionsfähigkeit des Katalysators in definierten Zeitabschnitten zu prüfen. Das bisher verwendete Standardverfahren umfaßt die Ermittlung der Abgasemission während eines vorgegebenen Fahrzyklus und ist auf Grund der nötigen Simulation der Betriebszustände des Motors und der Meßtechnik sehr zeit- und kostenaufwendig.

Aus der DE-OS 3 443 649 ist ein Verfahren zur Überprüfung eines Katalysators bekannt. Hierfür wird vor und hinter dem Katalysator jeweils eine Lambdasonde angeordnet. Die Regelfrequenzen der Spannungssignale der beiden Sonden werden bei der Steuerung des Kraftstoff/Luft Verhältnisses miteinander verglichen. Da die Effizienz eines Katalysators u.a. an Hand seiner Fähigkeit bestimmt wird, Sauerstoff zu speichern, kann aus dem Verhältnis der beiden Regelfrequenzen auf die Funktionsfähigkeit des Katalysators geschlossen werden. Nachteilig an dieser Vorrichtung ist, daß der Quotient der Regelfrequenz für jeden Fahrzeugtyp und jede Katalysatoranlage unterschiedlich ist. Die Meßgröße wird nicht nur durch die Effektivität des Katalysators festgelegt, sondern auch durch die Eigenschaften der Lambdasonden und der Regelelektronik bestimmt. Desweiteren sind die bekannten Anordnungen nicht in der Lage, auf die Motoreinstellung so einzuwirken, daß ein erhöhter Kohlenmonoxid- und/oder Wasserstoffausstoß bzw. ein größeren Anteil an Stickoxid im Abgas durch eine entsprechende Motorregelung reduziert werden kann. Es ist deshalb nicht auszuschließen, daß ein funktionstüchtiger Katalysator wegen einer schlechten Motorregelung als funktionsuntüchtig eingestuft wird.

Aus der JP-A-62 153 546 ist ein Detektor für einen Motor bekannt, wobei in die Abgasleitung des Motors ist ein Katalysator eingebaut. Vor der Eintrittsöffnung des Katalysators ist ein Sauerstoffsensor angeordnet, während hinter der Austrittsöffnung des Katalysators ein Stickstoffsensor und ein Kohlenmonoxidsensor in die Abgasleitung eingebaut sind. Wird ein zu hoher Stickstoffanteil oder ein zu hoher Kohlenmonoxidanteil im Abgas festgestellt, so wird von einer Kontrolleinheit ein Warnsignal abgegeben.

In der JP-A-21 25 941 ist eine Vorrichtung zur Kontrolle des Brennstoff/Luft Verhältnisses eines Motors beschrieben. Zu diesem Zweck ist in die Abgasleitung des Motors ein Katalysator eingebaut. Vor der Eintrittsöffnung des Katalysators ist ein Sauerstoffsensor angeordnet, während hinter der Austrittsöffnung des Katalysators ein Stickstoffsensor und ein Kohlenmonoxidsensor in die Abgasleitung eingebaut sind. Wird bei der bekannten Vorrichtung ein zu hoher Stickstoffanteil oder ein zu hoher Kohlenmonoxidanteil im Abgas festgestellt, so erfolgt eine Regelung des Stickstoff/Luft Verhältnisses.

In der JP-A-63 23 1252 ist eine Vorrichtung beschrieben, mit welcher der Zeitpunkt ermittelt wird, an dem ein Katalysator ausgetauscht werden muß. Die Überwachung des Katalysators erfolgt mit zwei Sauerstoffsensoren, die an eine Überwachungseinheit angeschlossen sind.

Aus der US-A-4 007 598 ist eine Vorrichtung zur Überwachung eines Katalysators bekannt. Zu diesem Zweck sind vor der Eintrittsöffnung des Katalysators ein Sauerstoffsensor und ein Sensor zur Bestimmung des Brennstoff/Luft Verhältnisses angeordnet.

Dem Ausgang des Katalysators sind ein Sauerstoffsensor und ein Temperatursensor nachgeschaltet.

In der US-A-3 969 932 ist ein Vorrichtung zur Überwachung eines Katalysators beschrieben. Hierfür ist vor und hinter dem Katalysator jeweils ein Sauerstoffsensor angeordnet.

In der EP-A-492 165 sind ein Verfahren und eine Vorrichtung zur Überprüfung eines Katalysators beschrieben. Dem Katalysator ist zu diesem Zweck ein Sauerstoffsensor vor- und ein Wasserstoff-/Kohlenmonoxidsensor nachgeschaltet.

Der Erfindung liegt die Aufgabe zugrunde, ein Verfahren aufzuzeigen, mit dem die Regelung eines Otto-Motors und die Überprüfung des nachgeschalteten Katalysators möglich ist, sowie eine hierfür geeignete Vorrichtung zu schaffen.

Gelöst wird diese Aufgabe durch das in Patentanspruch 1 offenbarte Verfahren.

Eine Vorrichtung zur Durchführung des Verfahrens ist in Patentanspruch 2 offenbart.

Die Erfindung wird nachfolgend anhand einer schematischen Zeichnung näher erläutert. Die einzige zur Beschreibung gehörende Figur zeigt eine Vorrichtung, die eine Lambdasonde 2, eine Sensoreinheit 3 und eine Diagnose- und Motorsteuerungseinheit 4 aufweist. Ferner ist in die Vorrichtung die Motoreinheit 5 integriert. In die Abgasleitung 7A der Motoreinheit 5 ist ein Katalysator 6 eingebaut. Zwischen der Motoreinheit 5 und dem Katalysator 6 ist die Lambdasonde 2 in die Abgasleitung 7A integriert. Am Ausgang 6B des Katalysators ist die Sensoreinheit 3 in die Abgasleitung 7A eingebaut. Diese steht über Signalleitungen 8 mit dem Signaleingang 4A der Diagnose- und Motorsteuerungseinheit 4 in Verbindung. Der zweite Signaleingang 4B dieser Diagnose- und Motorsteuerungseinhet 4 ist über eine Leitung 9 mit der Lambdasonde 2 verbunden. Mit Hilfe der Lambdasonde 2 wird die Regellage der Motoreinstellung ermittelt. Die Sensoreinheit 3 ist so ausgebildet, daß mit ihr der Kohlenmonoxid- und/oder Wasserstoffanteil im Abgas gemessen werden kann. Ferner kann mit ihr der Stickoxidanteil ermitteln werden. Zusätzlich kann mit ihr der Restsauerstoff des Abgases nach Ausreaktion mit den oxidierbaren Bestandteilen wie Kohlenmonoxid und Wasserstoff im Katalysator ermittelt werden. Ferner ist die Messung der Gleichgewichtssauerstoffkonzentration bzw. die tatsächliche Sauerstoffkonzentration ohne die beschriebene Ausreaktion möglich. Die Sensoreinheit ist so ausgebildet, daß die obenerwähnten Abgasanteile einzeln bzw. zwei oder mehrere Anteile gleichzeitig gemessen werden können, je nachdem welche Regelung oder Überprüfung von der Diagnose- und Motorsteuerungseinheit 4 gerade vorgenommen wird. Für die Ausführung der Sensoreinheit ist es vorteilhaft, wenn mehrere der Abgaskomponenten mit einem Sensorbauteil erfaßt werden können.

Wie bereits eingangs erwähnt ist zur Regelung der Motoreinheit 5 und zur Überprüfung des Katalysators 6 die Diagnose- und Motorsteuerungseinheit 4 vorgesehen. Für die Regelung und Steuerung werden die Ausgangssignale der Lambdasonde 2 und der Sensoreinheit 3 dieser Einheit 4 zugeführt. Die Diagnose- und Motorsteuerungseinheit 4 nimmt die Auswertung dieser Signale vor und leitet sie, soweit sie für die Regelung der Motoreinheit 5 erforderlich sind über eine Leitung 10 an diese weiter. Zur Überprüfung des Katalysators 6 werden vor allem die Anteile an Wasserstoff- und/oder Kohlenmonoxid mit einem vorgebbaren Grenzwert verglichen. Wird dieser überschritten, so wird ein Signal erzeugt, das die Funktionsunfähigkeit des Katalysators 6 anzeigt. Da die erfindungsgemäße Vorrichtung 1 nicht nur die Lambdasonde 2, sondern auch die Sensoreinheit 3 mit den oben beschriebenen Meßmöglichkeiten umfaßt, ist mit der Diagnose- und Motorsteuerungseinheit 4 eine vorteilhafte Regelung der Motoreinheit 5 möglich. Wird von der Diagnose- und Motorsteuerungseinheit 4 nicht eine unzulässige Erhöhung an Stickoxid sowie Kohlenmonoxid und/oder Wasserstoff ermittelt, was auf einen Defekt des Katalysators 6 schließen läßt, sondern ist nur eine der Komponenten relativ groß, kann eine Regellagenverschiebung zu fetteren bzw. weniger fetten Regellagen bewirkt werden. Im ersten Fall kommt es zu einer Erniedrigung des Stickoxidanteils, während im zweiten Fall eine Erniedrigung des Kohlenmonoxidanteils die Folge ist. Damit können die oben beschriebenen Alterungseffekte der Vor-Kat-Lambdasonde bzw. des Katalysators 6 reduziert werden. Die Steuerung besonderer Betriebszustände, die ebenfalls unter Ausnutzung der von der Lambdasonde 2 und der Sensoreinheit 3 kommenden Signale durchgeführt wird, wird dadurch möglich, daß sowohl bei Luft- als auch bei Brennstoffanreicherung die Motoreinstellung nicht zu unzulässig hohen Schadstoffausstößen führt. Wird nur eine der Komponenten Kohlenmonoxid und/oder Wasserstoff bzw. Stickoxid erfaßt, so ist zur Auswertung noch die Kenntnis des Sauerstoffgehalts erforderlich, wobei sich insbesondere die Kenntnis des im Abgas verbleibenden Restsauerstoffs ohne Ausreaktion mit den oxidierbaren Abgasbestandteilen nach Verlassen des Katalysators als vorteilhaft erweist. Mit Hilfe des Sauerstoffgehalts wird die Regellage bestimmt. Somit ist bei einer überhöhten Konzentration an Kohlenmonoxid und/oder Wasserstoff bzw. Stickoxid feststellbar, daß diese auf einer alterungsbedingten Änderung der Regelcharakteristik oder einer Verschlechterung des Konversionseffekts des Katalysators 6 beruht. Daraufhin können entsprechende Nachregelungen der Motorsteuerung bzw. Defektmeldungen vorgenommen werden. Die Messungen der Geichgewichts- Sauerstoffkonzentration durch die Sensoreinheit 3 eignet sich insbesondere bei der Überwachung besonderer Betriebszustände z. B. Mageranreicherung bei Kaltstart des Motors 5.

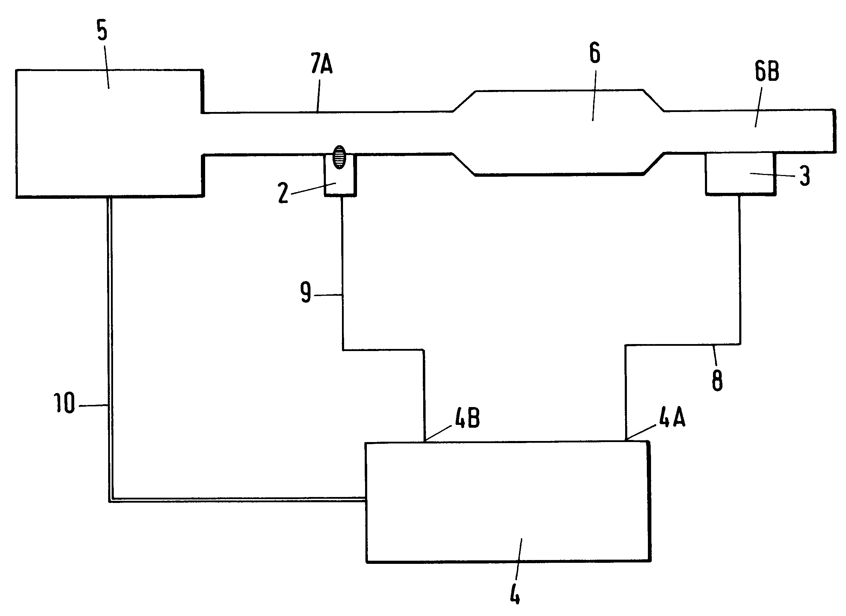

## Patentansprüche

1. Verfahren zur Regelung der Abgaszusammensetzung eines Otto-Motors (5) und zur Überprüfung eines Katalysators (6), wobei die Zusammensetzung des Abgases teilweise vor und hinter dem Katalysator erfaßt wird, dadurch gekennzeichnet, daß die Anteile von Sauerstoff, Wasserstoff und Stickoxid des aus dem Katalysator (6) kommenden Abgases gemessen und der Sauerstoffanteil des aus dem Motor kommenden Abgases ermittelt wird, daß bei einer unzulässigen Erhöhung der Anteile von Stickoxid oder Wasserstoff im Abgas die Regellage des Otto-Motors (5) zu einer fetteren oder wenig fetteren Einstellung verschoben wird, und daß bei gleichzeitiger Erhöhung von Stickoxid und Wasserstoff im Abgas eine Fehlfunktion des Katalysators (6) angezeigt wird.

2. Vorrichtung zur Regelung der Abgaszusammensetzung eines Otto-Motors (5) und zur Funktionsprüfung eines nachgeschalteten Katalysators (6), wobei zwischen dem Motor (5) und dem Katalysator (6) ein Lambdasonde (2) angeordnet ist, deren Ausgang an eine Auswerteeinrichtung (4) angeschlossen ist, und die Zusammensetzung des Abgases teilweise vor und hinter dem Katalysator erfaßt wird, dadurch gekennzeichnet, daß hinter dem Ausgang (6B) des Katalysators (6) eine Sensoreinheit (3) zur Messung des Sauerstoffs, des Wasserstoffs und des Stickoxids angeordnet ist, deren Signalausgänge ebenso wie die Signalausgänge der Lambdasonde (2) mit einer als Diagnoseund Motorsteuerungseinheit ausgebildeten Auswerteeinheit (4) verbunden und die Ausgangssignale der Diagnose- und Motorsteuerungseinheit (4) über Leitungen (10) der Motoreinheit (5) zugeführt sind, wobei in der Auswerteeinheit Mittel vorgesehen sind, die bei einer unzulässigen Erhöhung der Anteile von Stickoxid oder Wasserstoff im Abgas die Regellage des Otto-Motors (5) zu einer fetteren oder wenig fetteren Einstellung verschieben, und bei gleichzeitiger Erhöhung von Stickoxid und Wasserstoff im Abgas eine Fehlfunktion des Katalysators (6) anzeigen.

3. Vorrichtung nach Anspruch 2, dadurch gekennzeichnet, daß die Sensoreinheit (3) aus einem oder mehreren keramischen Festelektrolyten besteht.

## Claims

1. Method for controlling the exhaust composition of an Otto engine (5) and for checking a catalytic converter (6), the composition of the exhaust gas being recorded in part upstream and in part downstream of the catalytic converter, characterized in that the oxygen, hydrogen and nitrogen oxide contents of the exhaust gas coming from the catalytic converter (6) are measured and the oxygen content of the exhaust gas coming from the engine is determined, in that, in the event of an impermissible increase in the nitrogen oxide or hydrogen contents of the exhaust gas, the control position of the Otto engine (5) is shifted to a richer or leaner setting, and in that, if there is a simultaneous increase in the nitrogen oxide and hydrogen in the exhaust gas, malfunctioning of the catalytic converter (6) is indicated.

2. Apparatus for controlling the exhaust composition of an Otto engine (5) and for testing the functioning of a downstream catalytic converter (6), there being arranged between the engine (5) and the catalytic converter (6) a lambda probe (2), the output of which is connected to an evaluation device (4), and the composition of the exhaust gas being recorded in part upstream and in part downstream of the catalytic converter, characterized in that a sensor unit (3) for measuring the oxygen, hydrogen and nitrogen oxide is arranged downstream of the output (6B) of the catalytic converter (6) and its signal outputs are connected to an evaluation unit (4) designed as a diagnostic and engine control unit, as are the signal outputs of the lambda probe (2), and the output signals of the diagnostic and engine control unit (4) are fed to the engine unit (5) via lines (10), means being provided in the evaluation unit which, in the event of an impermissible increase in the nitrogen oxide or hydrogen contents of the exhaust gas, shift the control position of the Otto engine (5) to a richer or leaner setting and, in the event of a simultaneous increase in the nitrogen oxide and hydrogen in the exhaust gas, indicate malfunctioning of the catalytic converter (6).

3. Apparatus according to Claim 2, characterized in that the sensor unit (3) comprises one or more ceramic solid electrolytes.

## Revendications

1. Procédé de régulation de la composition des gaz d'échappement d'un moteur à combustion interne (5) à allumage commandé et de contrôle d'un dispositif de catalyse (6), la composition des gaz d'échappement étant mesurée pour partie en amont et en aval du dispositif de catalyse, caractérisé par le fait que l'on détermine les fractions d'oxygène, d'hydrogène et d'oxyde d'azote présentes dans les gaz d'échappement à la sortie du dispositif de catalyse (6), par le fait que, lors d'une élévation non admissible de la fraction d'oxyde d'azote ou de la fraction d'hydrogène dans les gaz d'échappement, on modifie le point de réglage du moteur à combustion interne (5) à allumage commandé pour un réglage plus riche ou moins riche et par le fait qu'en cas d'augmentation simultanée de l'oxyde d'azote et de l'hydrogène, on signale un disfonctionnement du dispositif de catalyse (6).

2. Dispositif pour la régulation de la composition des gaz d'échappement d'un moteur à combustion interne (5) à allumage commandé et pour le contrôle du fonctionnement d'un dispositif de catalyse (6) placé en aval du moteur, une sonde Lambda (2) dont la sortie est connectée à un dispositif d'exploitation (4) étant disposée entre ledit moteur (5) et le dispositif de catalyse (6) et la composition des gaz d'échappement étant mesurée pour partie en amont et en aval du dispositif de catalyse, caractérisé par le fait qu'un module de détection (3) est disposé en aval de la sortie (6B) du dispositif de catalyse (6) pour la mesure de l'oxygène, de l'hydrogène et de l'oxyde d'azote, module dont les sorties de signal, de même que les sorties de signal de la sonde lambda (2), sont connectées à une unité (4) d'exploitation et de commande du moteur et par le fait que les signaux de sortie de l'unité (4) d'exploitation et de commande du moteur sont transmis à l'ensemble moteur (5) par l'intermédiaire de conducteurs (10), des moyens qui, lors d'une élévation non admissible de la fraction d'oxyde d'azote ou de la fraction d'hydrogène présente dans les gaz d'échappement, modifient le point de réglage du moteur à combustion interne (5) à allumage commandé pour un réglage plus riche ou moins riche et qui, en cas d'augmentation simultanée de l'oxyde d'azote et de l'hydrogène, indiquent un disfonctionnement du dispositif de catalyse (6) étant prévus dans l'unité (4) d'exploitation.

3. Dispositif selon la revendication 2, caractérisé par le fait que le module de détection (3) comprend un ou plusieurs électrolytes solides céramiques.
